# EUROPÄISCHE PATENTSCHRIFT

(11) **EP 0 637 511 B1**
(45) Veröffentlichungstag und Bekanntmachung des Hinweises auf die Patenterteilung: **05.03.1997**
(21) Anmeldenummer: 94100430.1
(22) Anmeldetag: 13.01.1994
(51) Int. Cl.: B32B 27/34, B32B 1/08, F16L 11/04, C08L 33/24, C08L 27/16

(54) **Thermoplastische Mehrschichtverbunde**
Thermoplastic laminates
Stratifiés thermoplastiques

(30) Priorität: 04.08.1993 DE 4326130
(43) Veröffentlichungstag der Anmeldung: 08.02.1995
(73) Patentinhaber: HÜLS AKTIENGESELLSCHAFT, 45764 Marl (DE)
(72) Erfinder: Jadamus, Hans, Dr., D-45768 Marl (DE); Röber, Stefan, Dr., D-45772 Marl (DE)

(56) Entgegenhaltungen:
- EP-A- 0 419 218
- EP-A- 0 523 644
- EP-A- 0 545 368
- RESEARCH DISCLOSURE Nr. 321 , Januar 1991 , EMSWORTH , GB Seiten 68A - 68B 'Control of functionality in glutarimide polymers'

## Beschreibung

Gegenstand der Erfindung sind thermoplastische Mehrschichtverbunde aus Polyamid und Polyvinylidenfluorid.

Polyamide bzw. Polyvinylidenfluorid sind für eine Reihe von Anwendungen ungeeignet.

Polyamide sind beispielsweise nicht witterungsbeständig, da sie unter Belichtung altern, sowie Luftfeuchtigkeit aufnehmen. Dies führt zu Verfärbung, Verschlechterung der mechanischen Eigenschaften und Verzugserscheinungen. Obwohl Polyamide gute mechanische Eigenschaften, insbesondere gute Zähigkeit, aufweisen, haben sie eine schlechte Sperrwirkung; so können polare Substanzen leicht durch Polyamide migrieren. Dies ist beispielsweise bei Kraftstoffleitungen, in denen alkoholhaltiger Kraftstoff gefördert wird, äußerst nachteilig.

Polyvinylidenfluorid ist im allgemeinen gut witterungsbeständig und besitzt eine gute Chemikalienbeständigkeit. Darüber hinaus besitzt Polyvinylidenfluorid eine ausgezeichnete Sperrwirkung sowohl gegenüber polaren als auch unpolaren Medien. Nachteilig ist die Schlagempfindlichkeit. Insbesondere die Kerbschlagzähigkeit ist nicht ausreichend.

Es ist dem Fachmann bekannt, daß die weitaus meisten Polymere, so auch Polyamid und Polyvinylidenfluorid (PVDF), miteinander unverträglich sind, weshalb bei der Herstellung von Mehrschichtverbunden keine ausreichende Haftung zwischen den Laminatschichten erzielt wird. Ein kraftschlüssiger thermoplastischer Mehrschichtverbund ist aber bei technischen Anwendungen unbedingt erforderlich.

Aufgabe der vorliegenden Erfindung ist es, thermoplastische Mehrschichtverbunde aus Polyvinylidenfluorid- und Polyamidformmassen bereitzustellen. Die Formmassen und die daraus hergestellten thermoplastischen Mehrschichtverbunde sollen folgende Forderung erfüllen:
1. Die Formstoffe aus PVDF und Polyamid sollen im thermoplastischen Mehrschichtverbund fest aufeinander haften.
2. Der thermoplastische Mehrschichtverbund zwischen PVDF- und den Polyamidformstoffen soll gegen Kraftstoffe beständig sein.
3. Die typischen Gebrauchseigenschaften der Formmassen sollen durch die Modifikationen, die zur Erfüllung der Forderungen 1 und 2 notwendig werden, nicht verändert werden.

Thermoplastische Mehrschichtverbunde aus PVDF- und Polyamidformmassen sind an sich in zahlreichen Ausführungsformen bekannt.

In FR-PS 2 602 515 wird ein zweischichtiges Rohr mit einer Außenschicht aus Polyamid 11 und einer inneren Schicht aus weichgemachtem Polyvinylidenfluorid beschrieben. Eine kraftschlüssige Verbindung der Schichten liegt hierbei nicht vor, d. h. die Rohre erfüllen nicht die erste Forderung.

In der EP-A-0 523 644 werden Dreischichtverbunde offenbart, bei denen eine Schicht aus einem aliphatischen Polyamid und eine Schicht aus einem Fluorpolymeren durch eine Zwischenschicht verbunden werden, die aus einem Blend aus Polyamid und einem ganz speziellen Propfcopolymeren besteht.

Im Artikel "Control of functionality in glutarimide polymers" aus Research Disclosure, Nr. 321 (1991) Januar, Seiten 68 A und B, Emsworth, GB, wird beschrieben, daß Polyglutarimide mit alkylierenden bzw. esterbildenden Reagentien umgesetzt werden können, so daß deren Säure- und Anhydridfunktionalität verringert wird; auf diese Weise soll die Verträglichkeit in Blends verbessert werden.

Überraschenderweise wurde gefunden, daß die oben beschriebenen Forderungen 1 bis 3 durch thermoplastische Mehrschichtverbunde enthaltend
I. mindestens eine Schicht auf Basis einer Formmasse aus Polyamid, und
II. mindestens eine zur Schicht I benachbarten Schicht auf Basis einer Formmasse aus einer Mischung aus
   a) Polyvinylidenfluorid
      und
   b) Polyglutarimid,
wobei die Schichten miteinander kraftschlüssig verbunden sind, erfüllt werden.

Die Komponenten II a und II b werden im Gewichtsverhältnis 97,5 bis 50 : 2,5 bis 50, bevorzugt 97,5 bis 80 : 2,5 bis 20 und besonders bevorzugt 96 bis 90 : 4 bis 10 eingesetzt.

Der thermoplastische Mehrschichtverbund kann zusätzlich weitere Schichten aus Polyvinylidenfluoridpolymeren enthalten, die zur Schicht II, nicht aber zur Schicht I benachbart sind.

Für die Komponenten I kommen in erster Linie aliphatische Homo- und Copolyamide in Frage. Als Beispiel seien die 4.6-, 6.6-, 6.12-, 8.10-, 10.10-Polyamide o. ä. genannt. Bevorzugt werden 6-, 10.12-, 11-, 12- sowie 12.12- Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer α,ω-Aminocarbonsäure bzw. von dem davon abgeleiteten Lactam ausgegangen worden ist -
H. Dominghaus, **Die Kunststoffe und ihre Eigenschaften**, Seite 272, VDI-Verlag (1976).]

Sofern Copolyamide verwendet werden, können diese z. B. Adipinsäure, Sebacinsäure, Korksäure, Isophthalsäure oder Terephthalsäure als Cosäure bzw. Bis(4-aminocyclohexyl)-methan, Trimethylhexamethylendiamin, Hexamethylendiamin o. ä. als Codiamin enthalten.

Die Herstellung dieser Polyamide ist bekannt (z. B.: D. B. Jacobs, J. Zimmermann, **Polymerization Processes**, S. 424 - 467; Interscience Publishers, New York (1977); DE-AS 21 52 194).

Ebenfalls geeignet als Polyamide sind gemischt aliphatisch/aromatische Polykondensate, wie sie z. B. in den US-PSS 2 071 250; 2 071 251, 2 130 523; 2 130 948; 2 241 322; 2 312 966; 2 512 606; 3 393 210 bzw. in Kirk-Othmer; **Encyclopedia of Chemical Technology**, 3. Aufl., Vol. 18, Wiley & Sons (1982), S. 328 und 435, beschrieben werden. Als Polyamide geeignete Polykondensate sind gleichfalls Poly(etheresteramide) bzw. Poly(etheramide). Derartige Produkte werden z. B. in DE-OSS 27 12 987, 25 23 991 und 30 06 961 beschrieben.

Es können sowohl Polyamide mit überwiegend Aminoendgruppen als auch solche mit überwiegend Carbonsäureendgruppen eingesetzt werden. Bevorzugt sind Polyamide mit überwiegend Aminoendgruppen.

Das Molekulargewicht (Zahlenmittel) der Polyamide liegt oberhalb von 4 000, vorzugsweise oberhalb von 10 000 - entsprechend einer relativen Viskosität (ηᵣₑₗ) im Bereich von 1,65 bis 2,4.

Die Polyamide können bis zu 40 Gew.-% andere Thermoplaste enthalten, sofern diese die erfindungsgemäßen Eigenschaften nicht stören. Insbesondere seien hier Polycarbonat [H. Schnell, **Chemistry and Physics of Polycarbonates,** Interscience Publishers, New York (1981)], Acrylnitril/Styrol/Butadien- [Houben-Weyl, **Methoden der organischen Chemie,** Bd. 14/1, Georg Thieme Verlag Stuttgart, S. 393 - 406; **Ullmanns Encyclopädie der technischen Chemie,** 4. Auflage, Bd. 19, Verlag Chemie Weinheim (1981), S. 279 - 284], Acrylnitril/Styrol/Acrylat- **[Ullmanns Encyclopädie der technischen Chemie,** 4. Auflage, Bd. 19, Verlag Chemie Weinheim (1981), S. 277 - 295], Acrylnitril/Styrol-Copolymerisate **[Ullmanns Encyclopädie der technischen Chemie,** 4. Auflage, Bd. 19, Verlag Chemie Weinheim (1981), S. 273 ff.] oder Polyphenylenether (DE-OSS 32 24 691 und 32 24 692, US-PSS 3 306 874, 3 306 875 u. 4 028 341) genannt.

Sofern erforderlich, können die Polyamide schlagzäh eingestellt werden. Geeignete Modifier sind z. B. Ethylen/Propylen- oder Ethylen/Propylen/Dien-Copolymere (EP-A-0 295 076), Polypentenylen, Polyoctenylen oder statistische bzw. blockartig aufgebaute Copolymere aus alkenylaromatischen Verbindungen mit aliphatischen Olefinen oder Dienen (EP-A-0 261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen T_{g} < -10 °C, wobei der Kern vernetzt sein kann. Die Schale kann aus Styrol und/oder Methylmethacrylat und/oder weiteren ungesättigten Monomeren aufgebaut sein (DE-OSS 21 44 528, 37 28 685). Der Anteil an schlagzähmachender Komponente ist so zu wählen, daß die gewünschten Eigenschaften nicht verschlechtert werden.

Komponente II a enthält insbesondere Polyvinylidenfluorid, welches bevorzugt weichmacherfrei eingesetzt wird. Herstellung und Struktur des Polymeren sind bekannt. (Hans R. Kricheldorf, **Handbook of Polymer Synthesis,** Part A, Verlag Marcel Dekker Inc. New York - Basel - Hongkong, S. 191 f.; **Kunststoff Handbuch**, 1. Auflage, Band XI, Carl Hanser Verlag München (1971), S. 403 ff.).

Es können auch Copolymere auf Basis von Polyvinylidenfluorid erfindungsgemäß enthalten sein, die bis zu 40 Gew.-% andere Monomere aufweisen. Als solche zusätzlichen Monomere seien beispielhaft genannt: Trifluorethylen, Ethylen, Propen und Hexafluorpropen.

Das eingesetzte erfindungsgemäße Polyvinylidenfluorid weist in der Regel einen Melt Flow-Index von < 17 g/10 min, vorzugsweise von 2 bis 13 g/10 min (DIN 53 735) auf.

Als Komponente II b der Schicht II werden Polyglutarimide eingesetzt, welche mindestens die nachstehenden Grundbausteine aufweisen:
- i): 14 bis 85 Gew.-%, vorzugsweise
30 bis 70 Gew.- % 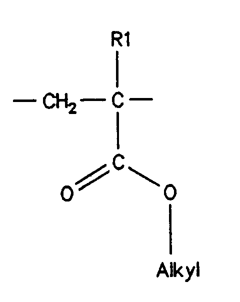
- ii): 10 bis 75 Gew.-%, vorzugsweise
20 bis 40 Gew.-% 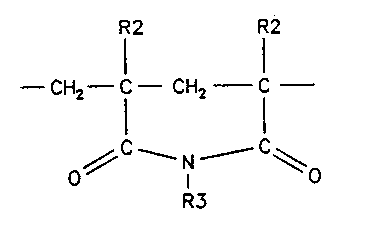
- iii): 0 bis 15 Gew.-% 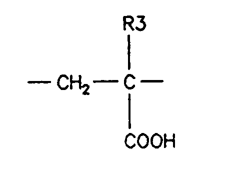
- iiii): 7 bis 20 Gew.-%, vorzugsweise
8 bis 12 Gew.-%

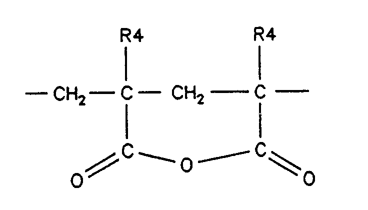

In den genannten Formeln bedeuten
Alkyl = Methyl, Ethyl, Propyl, Butyl, Hexyl
R1 bis R4 = -H, (CₙH₂ₙ₊₁) mit n = 1 bis 6,
wobei die Reste R1 bis R4 gleich oder verschieden sein können. Bevorzugt sind solche Grundbausteine, in denen R1 bis R4 einen Methylrest bedeuten. Ebenso bedeutet Alkyl bevorzugt Methyl.

Die Polymeren werden als Polyglutarimide bezeichnet. Es handelt sich hierbei um Polyalkylacrylsäureester, bei denen zwei benachbarte Carboxyl(at)gruppen zu einem cyclischen Säureimid umgesetzt worden sind. Die Imidbildung wird bevorzugt mit Ammoniak bzw. primären Aminen, wie z. B. Methylamin, durchgeführt. Die Produkte sowie ihre Herstellung sind bekannt (Hans R. Kricheldorf, **Handbook of Polymer Synthesis,** Part A, Verlag Marcel Dekker Inc. New York - Basel - Hongkong, S. 223 f.; H. G. Elias, **Makromoleküle,** Hüthig und Wepf Verlag Basel - Heidelberg - New York; US-PSS 2 146 209, 4 246 374).

Die erfindungsgemäß eingesetzten Polyglutarimide weisen in der Regel einen Melt Flow-Index von < 30 g/10 min, vorzugsweise von 0,2 bis 15 g/10 min, auf.

Zur Erhöhung der Kälteschlagzähigkeit können die Polyglutarimide noch entsprechende Modifier enthalten. Als Beispiel seien Kern/Schale-Polymere mit einem Polybutylacrylatkern und einer Schale aus Polymethylmethacrylat und/oder Polyglutarimid genannt. Außer den genannten Beispielen sind weitere Modifier möglich.

Den Formmassen für die Schichten I und II können übliche Hilfs- und Zusatzstoffe wie z. B. Flammschutzmittel, Stabilisatoren, Weichmacher, Verarbeitungshilfsmittel, Viskositätsverbesserer, Füllstoffe, hier insbesondere solche zur Verbesserung der elektrischen Leitfähigkeit, Pigmente o. ä. zugefügt werden. Die Menge der genannten Mittel ist so zu dosieren, daß die gewünschten Eigenschaften nicht ernsthaft beeinflußt werden.

Die Herstellung der Formmasse für die Schicht gemäß II erfolgt nach den üblichen und bekannten Verfahren durch Schmelzemischen der Komponenten II a und II b in einem gut knetenden Mischaggregat, wie z. B. einem Doppelschneckenkneter, bei Temperaturen, die sich nach den Schmelzpunkten der Komponente II a und II b richten, im allgemeinen bei Temperaturen zwischen 200 und 300 °C.

Die Herstellung der Komponente II aus den Komponenten II a und II b kann auch direkt im Aufbereitungsextruder erfolgen, in dem die Komponente II für die Herstellung des thermoplastischen Mehrschichtverbundes mit der Schicht I aufbereitet wird.

Die weiter oben aufgeführte Forderung Nr. 3 läßt sich um so besser erfüllen, desto kleiner der Gehalt an Komponente II b in der Formmasse für die Schicht II ist. Beispielsweise ist die Sperrwirkung gegen Methanol-haltige Kraftstoffe von Mischungen aus 95 Gew.-% Polyvinylidenfluoridpolymeren (Komponente II a) und 5 Gew.-% einer erfindungsgemäßen Polyglutarimid-Formmasse (Komponente II b) nur unwesentlich schlechter als die Sperrwirkung von reinem Polyvinylidenfluorid.

Die Fertigung der Mehrschichtverbunde kann ein- oder mehrstufig erfolgen.

Beim einstufigen Spritzgießverfahren bringt man die verschiedenen Schmelzen in einer Form zusammen und läßt das Formteil erkalten (Mehrkomponentenspritzguß). Beim einstufigen Extrusionsverfahren werden in üblicher Weise die verschiedenen Schmelzen coextrudiert.

Bei den mehrstufigen Verfahren wird zunächst ein Formteil aus einer der Komponenten I oder II hergestellt und dann mit den übrigen Komponenten durch Pressen, Spritzgießen oder Extrudieren verbunden.

Die erfindungsgemäßen Mehrschichtverbunde weisen in hervorragendem Maße eine gute Beständigkeit sowie Sperrwirkung gegen Diffusion gegenüber chemischen Agenzien, Lösemitteln und Kraftstoffen auf. Ferner sind die Schichten kraftschlüssig miteinander verbunden, so daß z. B. bei thermischer Ausdehnung oder Biegen des Fertigteils kein Abscheren der verschiedenen Schichten voneinander auftritt. Ferner ist es auch möglich, Teile herzustellen, welche die erfindungsgemäßen Mehrschichtverbunde mehrfach übereinander (alternierend) enthalten.

Die erfindungsgemäßen Mehrschichtverbunde finden bei Konstruktionsteilen, vor allem im Bereich der Elektro-, Maschinenbau- und Automobilindustrie dort Verwendung, wo die Sperrwirkung des Polyvinylidenfluorids mit den guten mechanischen Eigenschaften des Polyamids, insbesondere der sehr guten Kälteschlagzähigkeit kombiniert werden soll oder wo die nachteiligen Eigenschaften des Polyamids wie mangelnde UV-Beständigkeit, nicht ausreichende Kratzfestigkeit oder mangelnde chemische Beständigkeit durch eine Beschichtung mit Polyvinylidenfluorid ausgeglichen werden sollen.

Die genannten Parameter wurden mit Hilfe nachstehender Meßverfahren bestimmt.

Die **Bestimmung des Melt Flow-Index der Polyvinylidenfluoride** erfolgt bei 230 °C und unter einer Belastung von 5 kg (DIN 53 735).

Die **Bestimmung des Melt Flow-Index der Polyglutarimide** erfolgt bei 230 °C und unter einer Belastung von 3,8 kg (DIN 53 735).

Die **Prüfung der mechanischen Trennbarkeit** an der Grenzfläche erfolgt mit einem Metallkeil (Schneidenwinkel: 5 Grad; Auflagegewicht: 2,5 kg), wobei versucht wird, die zu prüfende Materialgrenzschicht zu trennen. Erfolgt die Trennung an der Grenze zwischen den Komponenten, so ist die Haftung schlecht. Erfolgt die Trennung dagegen ganz oder teilweise innerhalb einer der beiden Komponenten, so liegt eine gute Anhaftung vor.

Die **Bestimmung der Lösungsviskosität** (rel. Viskosität ηᵣₑₗ) **der Polyamide** erfolgt unter Verwendung einer 0,5 gew.-%igen m-Kresol-Lösung bei 25 °C gemäß DIN 53 727/ISO 307.

Zur **Bestimmung der Aminoendgruppen** wird 1 g der Polyamide in 50 ml m-Kresol bei 25 °C gelöst. Die Lösung wird mit Perchlorsäure potentiometrisch titriert.

Zur **Bestimmung der Carboxylendgruppen** in den Polyamiden wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglykol (0,05 mol KOH/1) gegen Phenolphthalein bis zum Farbumschlag titriert.

### Beispiele

Mit Buchstaben gekennzeichnete Beispiele sind nicht erfindungsgemäß.

### Komponente I

- PA 1:: Polyamid 12 (ηᵣₑₗ: 2,1; Weichmachergehalt: 0,
9 mmol/kg Aminoendgruppen; 48 mmol/kg Carboxylendgruppen; VESTAMID® L 2140 - HÜLS AG).
- PA 2:: Polyamid 12 (ηᵣₑₗ: 2,1; Weichmachergehalt: 15 Gew.-Tle. N-n-Butylbenzolsulfonamid,
9 mmol/kg Aminoendgruppen; 48 mmol/kg Carboxylendgruppen; VESTAMID® L 2124 - HÜLS AG).
- PA 3:: Polyamid 12 (ηᵣₑₗ: 2,1; Weichmachergehalt: 15 Gew.-Tle. N-n-Butylbenzolsulfonamid,
50 mmol/kg Aminoendgruppen; 8 mmol/kg Carboxylendgruppen).
- PA 4:: Polyamid 6.12 (ηᵣₑₗ: 1,9; Weichmachergehalt: 0,
93 mmol/kg Aminoendgruppen; 29 mmol/kg Carboxylendgruppen).
- PA 5:: Polyamid 6 (ηᵣₑₗ: 2,01; Weichmachergehalt: 0,
33 mmol/kg Aminoendgruppen; 31 mmol/kg Carboxylendgruppen).

### Komponente II

- PVDF 1:: Polyvinylidenfluorid (Melt Flow Index: 13 g/10 min, DYFLOR® LE - HÜLS AG).
- PVDF 2:: Polyvinylidenfluorid (Melt Flow Index: 8,5 g/10 min, DYFLOR® EE - HÜLS AG).
- PVDF 3:: Polyvinylidenfluorid bestehend aus
a) 100 Gew.-Tl. Polyvinylidenfluorid
   (Melt Flow Index: 8,5 g/10 min, DYFLOR® EE - HÜLS AG)
   und
b) 6 Gew.-Tl. handelsüblichem Leitfähigkeitsruß
   (Ketjenblack™ EC 300 - AKZO).

Die für die Komponente II b eingesetzen Polymeren sind aus den weiter oben mit i) bis iiii) gekennzeichneten Bausteinen aufgebaut, wobei Alkyl und R1 bis R4 jeweils Methyl bedeuten.

| | P 1 | P 2 | P 3 | P 4 |
|---|---|---|---|---|
| Gew.-% i) | 100 | 14 | 11 | 57 |
| Gew.-% ii) | 0 | 86 | 80 | 30 |
| Gew.-% iii) | 0 | 0 | 6 | 3 |
| Gew.-% iiii) | 0 | 0 | 3 | 10 |

- Z1:: Mischung bestehend aus
a) 50 Gew.-% PVDF 1
   und
b) 50 Gew.-% P1
- Z2:: Mischung bestehend aus
a) 50 Gew.-% PVDF 1
   und
b) 50 Gew.-% P2.
- Z3:: Mischung bestehend aus
a) 50 Gew.-% PVDF 1
   und
b) 50 Gew.-% P3.
- Z4:: Mischung bestehend aus
a) 50 Gew.-% PVDF 1
   und
b) 50 Gew.-% P4.
- Z5:: Mischung bestehend aus
a) 90 Gew.-% PVDF 1
   und
b) 10 Gew.-% P4.
- Z6:: Mischung bestehend aus
a) 95 Gew.-% PVDF 2
   und
b) 5 Gew.-% P4.
- Z7:: Mischung bestehend aus
a) 90 Gew.-% PVDF 3
   und
b) 10 Gew.-% P4.

### Herstellung der thermoplastischen Mehrschichtverbunde

Es wurden sowohl zweischichtige Folien als auch zwei- und dreischichtige Preßplatten hergestellt.

Die Herstellung der zweischichtigen Folien erfolgte in einer Labor-Coextrusionsanlage, deren zwei Speiseextruder Schneckendurchmesser von 25 mm bzw. 30 mm aufweisen. Die Zylindertemperaturen lagen bei 230 °C (PA 1, PA 2, PA 3), 250 °C (Z1, Z2, Z3, Z4, Z5, Z6) und 280 °C (PA 4, PA 5). Die Schichtdicken betrugen jeweils 0,5 mm.

Die Herstellung der Preßverbunde erfolgte in einer Laborpresse bei 270 °C, bei Versuchen mit PA 4 und PA 5 bei 280 °C, und mit einer Preßzeit von 5 min.

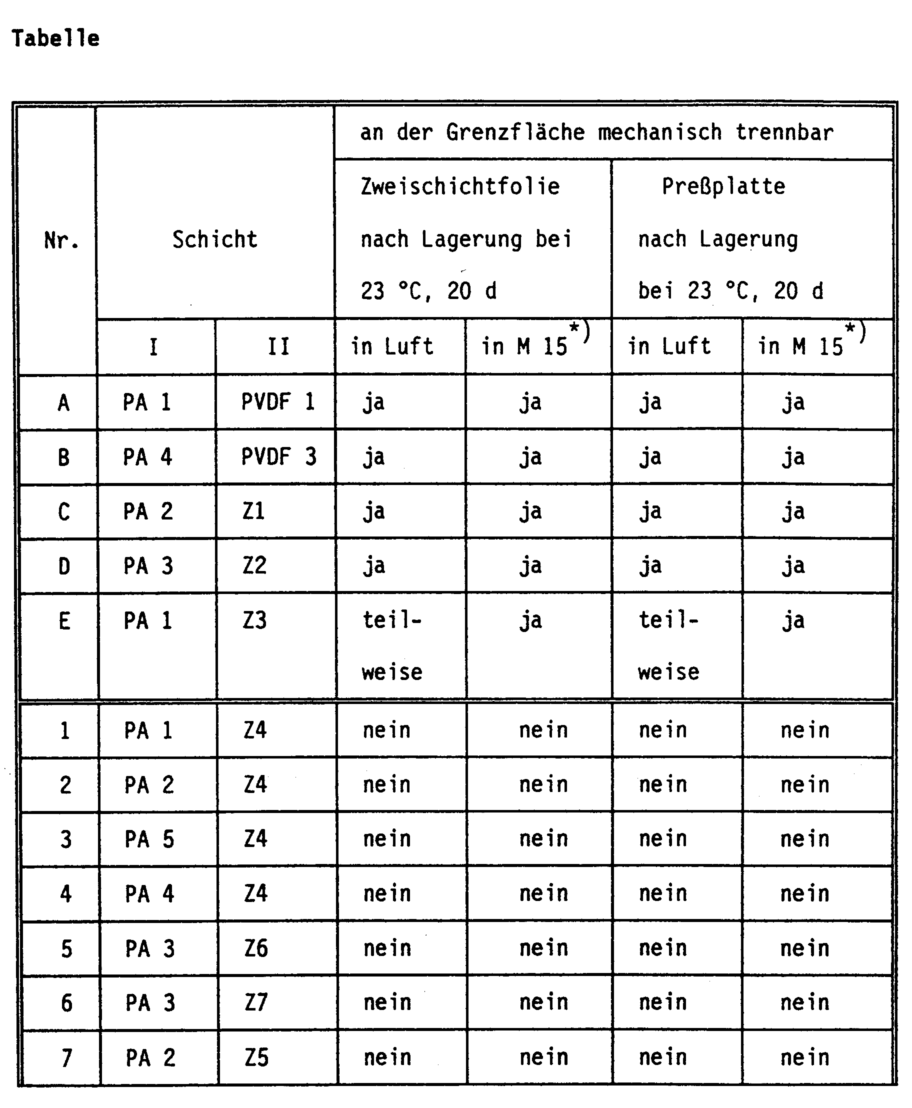

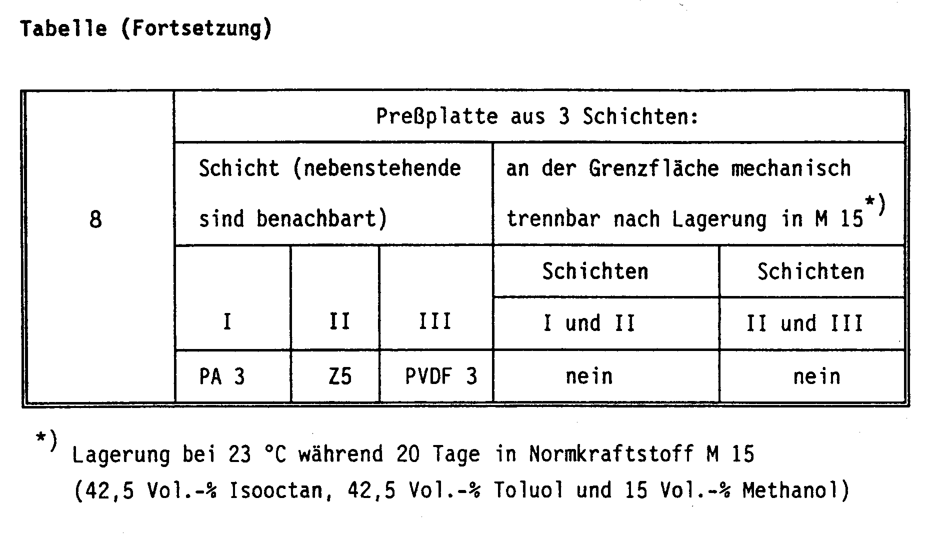

## Patentansprüche

1. Thermoplastischer Mehrschichtverbund enthaltend
I. mindestens eine Schicht auf Basis einer Formmasse aus Polyamid
und
II. mindestens eine zu I benachbarte Schicht auf Basis einer Formmasse aus einer Mischung aus
a) Polyvinylidenfluorid
und
b) Polyglutarimid,
wobei die Schichten miteinander kraftschlüssig verbunden sind.

2. Thermoplastischer Mehrschichtverbund nach Anspruch 1,
dadurch gekennzeichnet,
daß die Schicht II aus einer Formmasse aus einer Mischung aus
a) 97,5 bis 80 Gew.-% Polyvinylidenfluorid
und
b) 2,5 bis 20 Gew.-% Polyglutarimid
besteht.

3. Thermoplastischer Mehrschichtverbund nach den Ansprüchen 1 und 2,
dadurch gekennzeichnet,
daß die Schicht II aus einer Formmasse aus einer Mischung aus
a) 96 bis 90 Gew.-% Polyvinylidenfluorid
und
b) 4 bis 10 Gew.-% Polyglutarimid
besteht.

4. Thermoplastischer Mehrschichtverbund nach den Ansprüchen 1 bis 3,
dadurch gekennzeichnet,
daß die Komponente II b nachstehende Grundbausteine aufweist:
i) 14 bis 85 Gew.-% 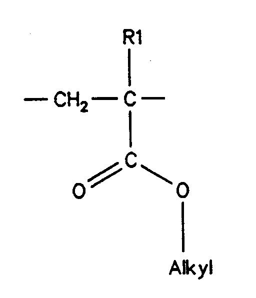
ii) 10 bis 75 Gew.-% 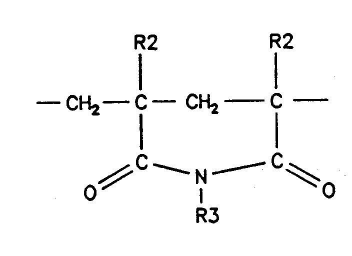
iii) 0 bis 15 Gew.-% 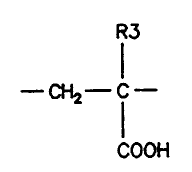
iiii) 7 bis 20 Gew.-% 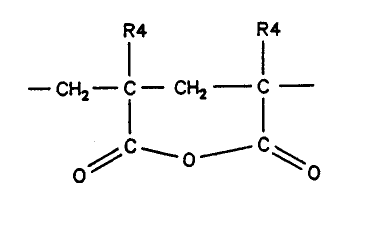
wobei Alkyl = Methyl, Ethyl, Propyl, Butyl, Hexyl
und R1 bis R4 = -H, (CₙH₂ₙ₊₁) mit n = 1 bis 6 bedeuten
und gleich oder verschieden sein können.

5. Thermoplastischer Mehrschichtverbund nach den Ansprüchen 1 bis 4,
dadurch gekennzeichnet, daß die Komponente II b nachstehende Grundbausteine aufweist:
i) 30 bis 70 Gew.-% 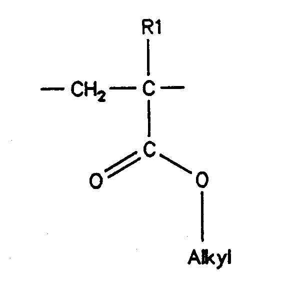
ii) 20 bis 40 Gew.-% 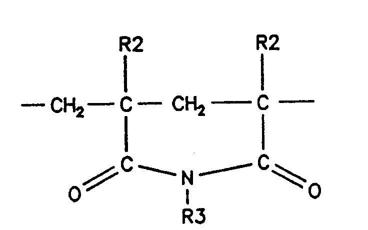
iii) 0 bis 15 Gew.-% 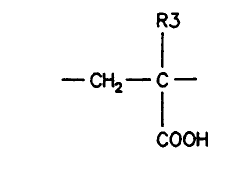
iiii) 8 bis 12 Gew.-% 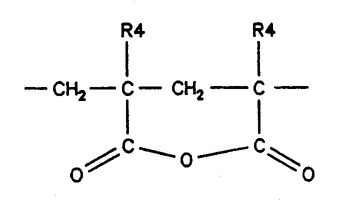
wobei Alkyl = Methyl, Ethyl, Propyl, Butyl, Hexyl
und R1 bis R4 = -H, (CₙH₂ₙ₊₁) mit n = 1 bis 6 bedeuten
und gleich oder verschieden sein können.

6. Thermoplastischer Mehrschichtverbund nach den Ansprüchen 1 bis 5,
dadurch gekennzeichnet,
daß die Schicht gemäß I eine Formmasse auf Basis von Polyamid 12 darstellt.

7. Thermoplastischer Mehrschichtverbund nach den Ansprüchen 1 bis 6,
dadurch gekennzeichnet,
daß Alkyl sowie R1 bis R4 eine Methylgruppe darstellen.

8. Thermoplastischer Mehrschichtverbund nach den Ansprüchen 1 bis 7,
dadurch gekennzeichnet,
daß die Komponente II a ein Vinylidenfluoridcopolymeres darstellt.

9. Thermoplastischer Mehrschichtverbund nach den Ansprüchen 1 bis 8,
dadurch gekennzeichnet,
daß die Komponente II a elektrisch leitfähig eingestellt ist und einen Oberflächenwiderstand kleiner 10⁹ Ohm aufweist.

10. Verwendung des thermoplastischen Mehrschichtverbundes nach den Ansprüchen 1 bis 9 in Formteilen.

11. Verwendung des thermoplastischen Mehrschichtverbundes nach den Ansprüchen 1 bis 10 für Hohlprofile.

## Claims

1. A thermoplastic multilayer composite comprising
I. at least one layer based on a moulding compound of polyamide
and
II. at least one layer neighbouring layer I based on a moulding compound comprising a mixture of
a) polyvinylidene fluoride
and
b) polyglutarimide,
the layers being adhesively bonded to one another.

2. A thermoplastic multilayer composite according to claim 1, characterized in that layer II comprises a moulding compound comprising a mixture of
a) from 97.5 to 80% by weight of polyvinylidene fluoride
and
b) from 2.5 to 20% by weight of polyglutarimide.

3. A thermoplastic multilayer composite according to either of claims 1 and 2, characterized in that layer II comprises a moulding compound comprising a mixture of
a) from 96 to 90% by weight of polyvinylidene fluoride
and
b) from 4 to 10% by weight of polyglutarimide.

4. A thermoplastic multilayer composite according to any of claims 1 to 3, characterized in that component II b contains the following basic building blocks:
i) from 14 to 85%
by weight of 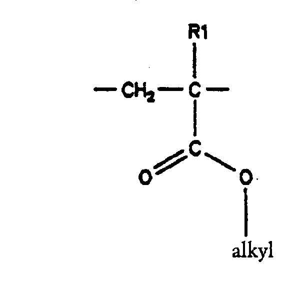
ii) from 10 to 75%
by weight of 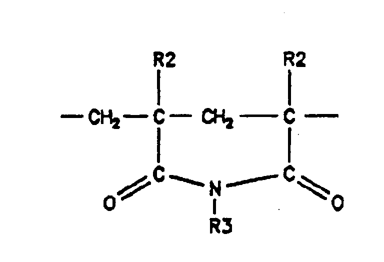
iii) from 0 to 15%
by weight of 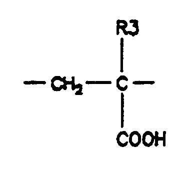
iiii) from 7 to 20%
by weight of 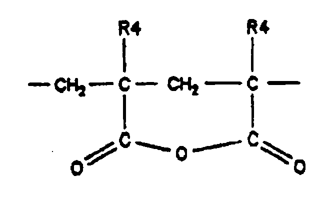
in which alkyl = methyl, ethyl, propyl, butyl, hexyl and R1 to R4 = -H, (CₙH₂ₙ₊₁) with n = 1 to 6 and can be identical or different.

5. A thermoplastic multilayer composite according to any of claims 1 to 4, characterized in that component II b contains the following basic building blocks:
i) from 30 to 70%
by weight of 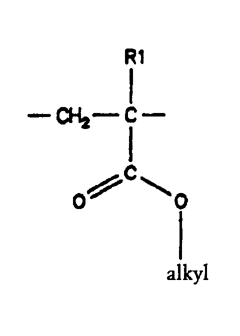
ii) from 20 to 40%
by weight of 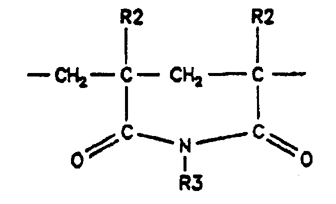
iii) from 0 to 15%
by weight of 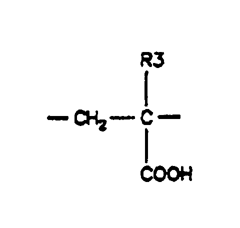
iiii) from 8 to 12%
by weight of 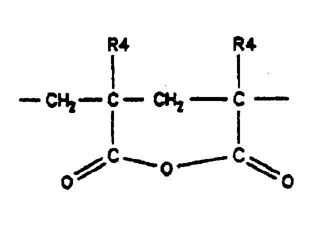
in which alkyl = methyl, ethyl, propyl, butyl, hexyl and R1 to R4 = -H, (CₙH₂ₙ₊₁) with n = 1 to 6 and can be identical or different.

6. A thermoplastic multilayer composite according to any of claims 1 to 5, characterized in that the layer according to I is a moulding compound based on polyamide 12.

7. A thermoplastic multilayer composite according to any of claims 1 to 6, characterized in that alkyl and R1 to R4 are a methyl group.

8. A thermoplastic multilayer composite according to any of claims 1 to 7, characterized in that component II a is a vinylidene fluoride copolymer.

9. A thermoplastic multilayer composite according to any of claims 1 to 8, characterized in that component II a has been made electrically conductive and has a surface resistance of less than 10⁹ ohm.

10. Use of the thermoplastic multilayer composite according to any of claims 1 to 9 in mouldings.

11. Use of the thermoplastic multilayer composite according to any of claims 1 to 10 for hollow profiles.

## Revendications

1. Composite thermoplastique multicouche, contenant
I. au moins une couche à base d'un mélange à mouler constitué de polyamide, et
II. au moins une couche voisine de la couche I, à base d'un mélange à mouler constitué d'un mélange
a) de poly(fluorure de vinylidène), et
b) de polyglutarimide,
les couches étant liées l'une à l'autre par une liaison dynamique.

2. Composite thermoplastique multicouche selon la revendication 1, caractérisé en ce que la couche II est constituée d'un mélange à mouler constitué d'un mélange
a) de 97,5 à 80 % en poids de poly(fluorure de vinylidène), et
b) de 2,5 à 20 % en poids de polyglutarimide.

3. Composite thermoplastique multicouche selon les revendications 1 et 2, caractérisé en ce que la couche II est constituée d'un mélange à mouler constitué d'un mélange
a) de 96 à 90 % en poids de poly(fluorure de vinylidène), et
b) de 4 à 10 % en poids de polyglutarimide.

4. Composite thermoplastique multicouche selon les revendications 1 à 3, caractérisé en ce que le constituant II b comporte les motifs de base suivants :
i) 14 à 85 % en poids de 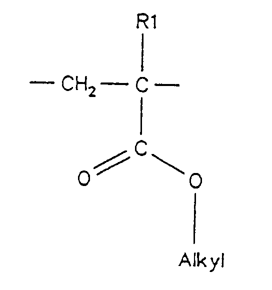
ii) 10 à 75 % en poids de 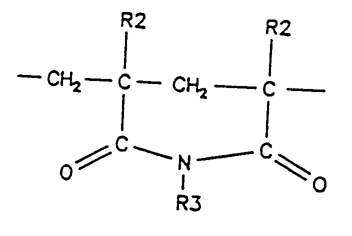
iii) 0 à 15 % en poids de 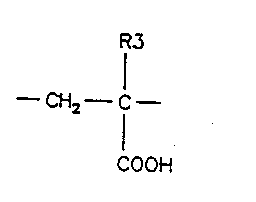
iv) 7 à 20 % en poids de 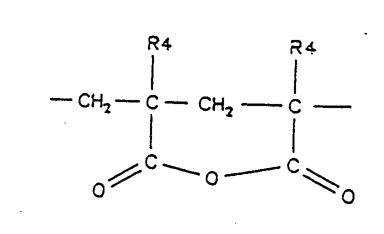
où alkyle représente les groupes méthyle, éthyle, propyle, butyle, hexyle, et R1 à R4 sont -H, (CₙH₂ₙ₊₁), avec n = 1 à 6, et peuvent être identiques ou différents.

5. Composite thermoplastique multicouche selon les revendications 1 à 4, caractérisé en ce que le constituant II b comporte les motifs de base suivants :
i) 30 à 70 % en poids de 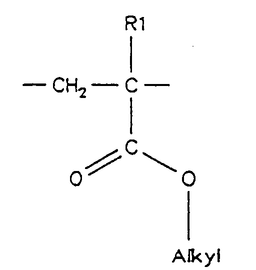
ii) 20 à 40 % en poids de 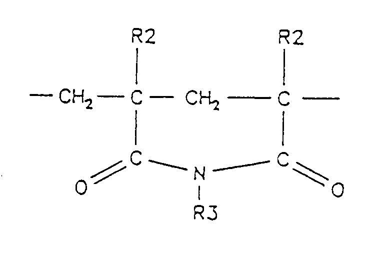
iii) 0 à 15 % en poids de 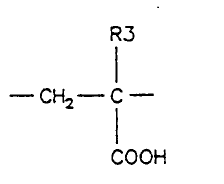
iv) 8 à 12 % en poids de 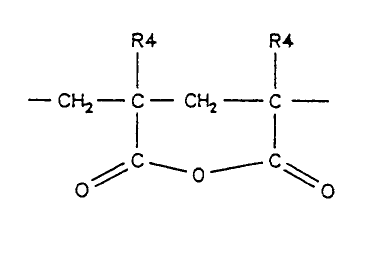
où alkyle représente les groupes méthyle, éthyle, propyle, butyle, hexyle, et R1 à R4 sont -H, (CₙH₂ₙ₊₁), avec n = 1 à 6, et peuvent être identiques ou différents.

6. Composite thermoplastique multicouche selon les revendications 1 à 5, caractérisé en ce que la couche selon I représente un mélange à mouler à base de polyamide 12.

7. Composite thermoplastique multicouche selon les revendications 1 à 6, caractérisé en ce que le groupe alkyle, ainsi que R1 à R4, représentent chacun un groupe méthyle.

8. Composite thermoplastique multicouche selon les revendications 1 à 7, caractérisé en ce que le constituant II a représente un copolymère du fluorure de vinylidène.

9. Composite thermoplastique multicouche selon les revendications 1 à 8, caractérisé en ce que le constituant II a est formulé de façon à être conducteur de l'électricité et présente une résistance superficielle inférieure à 10⁹ ohms.

10. Utilisation du composite thermoplastique multicouche selon les revendications 1 à 9 dans des objets moulés.

11. Utilisation du composite thermoplastique multicouche selon les revendications 1 à 10 pour des profilés creux.
